# EUROPÄISCHE PATENTSCHRIFT

(11) **EP 0 345 746 B1**
(45) Veröffentlichungstag und Bekanntmachung des Hinweises auf die Patenterteilung: **12.01.1994**
(21) Anmeldenummer: 89110271.7
(22) Anmeldetag: 07.06.1989
(51) Int. Cl.: B23B 31/20

(54) **Spannzange**
Collet
Pince de serrage

(30) Priorität: 07.06.1988 DE 3819407
(43) Veröffentlichungstag der Anmeldung: 13.12.1989
(73) Patentinhaber: Rall, Gerhard, D-71672 Marbach (DE)
(72) Erfinder: Rall, Gerhard, D-71672 Marbach (DE)
(74) Vertreter: Kastner, Hermann, Dipl.-Ing. Patentanwalt

(56) Entgegenhaltungen:
- DE-A- 3 010 578
- DE-C- 1 020 847
- DE-C- 2 732 677
- DE-U- 8 807 447
- FR-A- 1 371 605
- FR-A- 1 461 073
- GB-A- 1 267 690

## Beschreibung

Beim Bearbeiten zylindrischer Werkstücke auf Drehmaschinen werden vielfach Spannzangen zum Einspannen der Werkstücke eingesetzt. In noch stärkerem Umfange gilt das beim Verarbeiten von Stangenmaterial auf halb- oder vollautomatischen Drehmaschinen in Ein- oder Mehrspindelausführung. Bei einer großen Anzahl dieser Drehmaschinen werden die Spannzangen mittels einer Zugvorrichtung gespannt. Dabei werden einteilige und zweiteilige Spannzangen eingesetzt.

Bei den in einem Stück gefertigten Spannzangen muß bei einem Wechsel des Spanndurchmessers des Werkstückes die ganze Spannzange ausgewechselt werden und dafür von der Zugvorrichtung der Drehmaschine abgeschraubt werden. Zweiteilige Spannzangen weisen einen rohrförmigen Grundkörper und einen Spannkopfteil auf, die mittels einer Kupplungsvorrichtung miteinander gekuppelt sind. Der Grundkörper dient der Verbindung der Spannzange mit der Zugvorrichtung der Drehmaschine und der Spannkopfteil der Aufnahme des Werkstückes. Der Spannkopfteil ist durch am Umfang verteilt angeordnete axial und radial durchgehende Längsschlitze in einzelne Spannbacken aufgeteilt, die auf verschiedene Weise zur Bildung des Spannkopfteils zusammengehalten werden. Bei einem Wechsel des Spanndurchmessers verbleibt der Grundkörper an der Zugvorrichtung der Drehmaschine und nur der Spannkopfteil wird ausgewechselt.

Eine derartige zweiteilige Spannzange ist aus der GB-A-1 267 690 (Fig. 7) bekannt. Bei dieser Spannzange wird der am Grundkörper vorhandene Teil der Kupplungsvorrichtung durch eine umlaufende Nut auf der Innenseite des rohrförmigen Grundkörpers gebildet. Der am Spannkopf vorhandene Teil der Kupplungsvorrichtung wird durch radial auswärts gerichtete Vorsprünge gebildet, die Umfangsabschnitte eines umlaufenden Bundes an der Außenseite des ursprünglich einstückigen Spannkopfes darstellen.

Diese Ausbildung der Kupplungsvorrichtung ist die Schwachstelle dieser Spannzange. In diesem Längenabschnitt der Spannzange ist der zwischen der Außenseite des Grundkörpers und der Innenseite des Spannkopfteils liegende begrenzte Radialbereich auf 4 Unterbereiche aufgeteilt. Der eine Unterbereich entfällt auf den am Grundkörper außerhalb der umlaufenden Kupplungsnut verbliebenen Werkstoffquerschnitt. Ein zweiter Unterbereich entfällt auf den entsprechenden Werkstoffquerschnitt der am Spannkopfteil in Längsrichtung zwischen dem Kupplungsvorsprung und der Außenkonusfläche gelegenen umlaufenden Ausnehmung. Dazwischen liegt als dritter Unterbereich der radiale Überdeckungsbereich der als Kupplungsflächen an einander anliegenden Stirnwand einerseits des Grundkörpers und andererseits der Spannbacken. Der vierte Unterbereich schließlich ist der Radialbereich, der für die radiale Hubbewegung der Spannbacken zwischen der Außenseite der Vorsprünge der Spannbacken und der Innenseite der Nut am Grundkörper freigelassen werden muß, ebensowie der entsprechende Freiweg zwischen der Innenseite des Grundkörpers jenseits der Nut und dem Hals zwischen den Vorsprüngen und den eigentlichen Spannbacken. Gerade dieser vierte Unterbereich kann nicht beliebig klein gemacht werden, zumal dabei über das theoretische Maß der radialen Hubbewegung der Spannbacken hinaus ein gewisser Sicherheitszuschlag berücksichtigt werden muß, damit die Spannbacken die nötige Öffnungsbewegung auch vollständig ausführen können und sie nicht durch Schmutzteilchen innerhalb der Hohlräume daran gehindert werden und dann die Werkstücke nicht mehr in die Spannzange eingeführt werden können. Bei dem dritten Unterbereich, dem radialen Überdeckungsbereich der als Kupplungsflächen wirkenden Stirnwände muß ebenfalls ein gewisser Sicherheitszuschlag berücksichtigt werden, damit bei Werkstücken mit Untermaß gegenüber dem Nennmaß der Überdeckungsgrad der Stirnwände nicht zu gering und die Flächenpressung der Stirnwände zu groß wird. Aufgrund dieser Verhältnisse ist diese Spannzange für den Einsatz in modernen Drehmaschinen mit ihren sehr hohen Zugkräften nicht geeignet.

Der Erfindung liegt die Aufgabe zugrunde, eine teilbare Spannzange zu schaffen, die im Kupplungsbereich günstigere Kraftübertragungsverhältnisse aufweist als die bekannte Spannzange.

Diese Aufgabe wird durch eine Spannzange mit den im Anspruch 1 angegebenen Merkmalen gelöst.

Bei diser Spannzange kann man die radiale Hubbewegung der Spannbacken einschließlich eines gewissen Sicherheitszuschlages als gleich groß wie bei der bekannten Spannzange ansetzen. Der gesamte übrige Radialbereich muß aber nur noch auf zwei Unterbereiche aufgeteilt werden, nämlich auf den Unterbereich, der auf die verbleibende Wand einerseits am Grundkörper und andererseits an den Spannbacken entfällt, und auf den Unterbereich, der auf die als Kupplungsflächen an einander anliegenden Stirnwände entfällt. Damit läßt sich mit dieser Spannzange eine wesentlich höhere Zugkraft als bei der bekannten Spannangeübertragen, so daß sie den bei modernen Drehmaschinen vorgegebenen Anforderungen besser gerecht wird.

Bei einer Ausgestaltung der Spannzange nach Anspruch 2 wird der kleinstmögliche Schrägstellungswinkel für die Spannbacken beim Spannkopfwechseln erreicht und außerdem das Einführen der Vorsprünge in den Innenraum des Grundkörpers erleichtert.

Durch eine Ausbildung der Spannzange nach Anspruch 3 wird erreicht, daß die unter Belastung der Kupplungsvorrichtung unvermeidlich auftretende elastische Verformung des Kupplungsteils des Spannkopfes ausgeglichen wird und daß die tatsächliche Berührungsfläche der Kupplungsflächen innerhalb des Aufrisses der beiden Kupplungsflächen, und zwar nach Möglichkeit sogar im Mittelbereich dieses Aufrisses, gelegen ist und so ein Kantenreiten der beiden Teile untereinander vermieden wird. Dadurch werden örtliche Überbeanspruchungen der Teile vermieden, so daß auch dadurch die Belastbarkeit der Kupplungsvorrichtung wesentlich erhöht wird. Das gleiche gilt auch für eine Ausgestaltung der Spannzange nach Anspruch 4.

Im folgenden wird die Erfindung anhand eines in der Zeichnung dargestellten Ausführungsbeispieles näher erläutert. Es ziegen:
- Fig. 1: einen Längsschnitt der Spannzange im gekuppelten Zustand ihres Grundkörpers und ihres Spannkopfes;
- Fig. 2 und 3: einen Längsschnitt des Grundkörpers bzw. des Spannkopfes im entkuppelten Zustand;
- Fig. 4: einen Längsschnitt des Grundkörpers alleine nach der Linie IV - IV in Fig. 5;
- Fig. 5: einen Querschnitt des Grundkörpers nach der Linie V - V in Fig. 4;
- Fig. 6: einen Längsschnitt des Spannkopfes;
- Fig. 7: eine Stirnansicht des Spannkopfes vom hinteren Ende aus betrachtet;
- Fig. 8: eine Stirnansicht des Spannkopfes vom vorderen Ende aus betrachtet;
- Fig. 9: eine Stirnansicht des Spannkopfes in der gegenseitigen Stellung für den Kuppelvorgang;
- Fig. 10: einen ausschnittweise dargestellten Längsschnitt vom Kupplungsbereich des Grundkörpers;
- Fig. 11: eine ausschnittweise dargestellte ebene Abwicklung des Kupplungsbereiches des Grundkörpers.

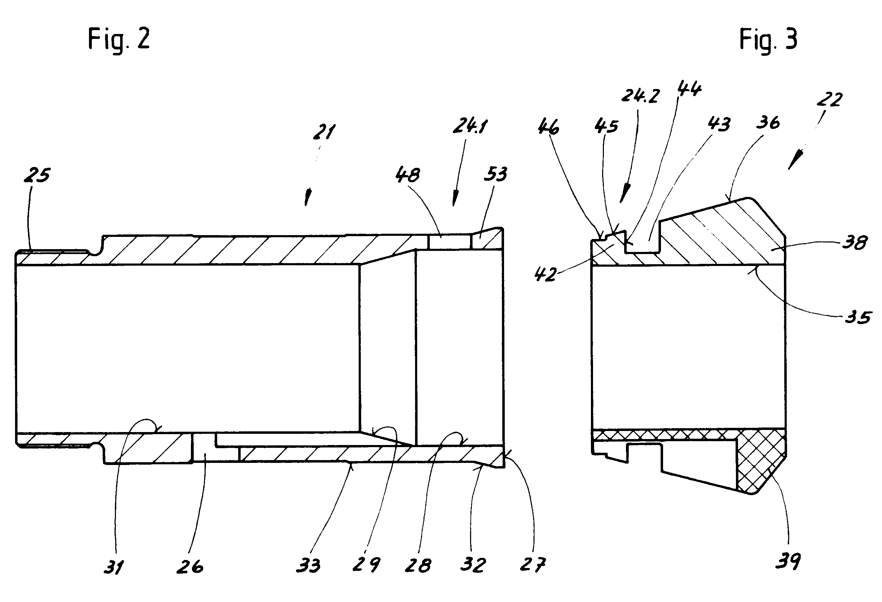

Die Spannzange 20 weist einen Grundkörper 21 und einen Spannkopf 22 auf. Die Spannzange 20 ist in einer Zangenaufnahme 23 der Hauptspindel eine Drehmaschine eingesetzt dargestellt, und zwar im gespannten Zustand. Der Grundkörper 21 und der Spannkopf 22 sind zwei selbständige Teile, die voneinander getrennt werden können (Fig. 2 und 3). Im Betriebszustand sind sie mittels einer in axialer Richtung formschlüssigen und in radialer Richtung nachgiebigen Kupplungsvorrichtung 24 miteinander gekuppelt.

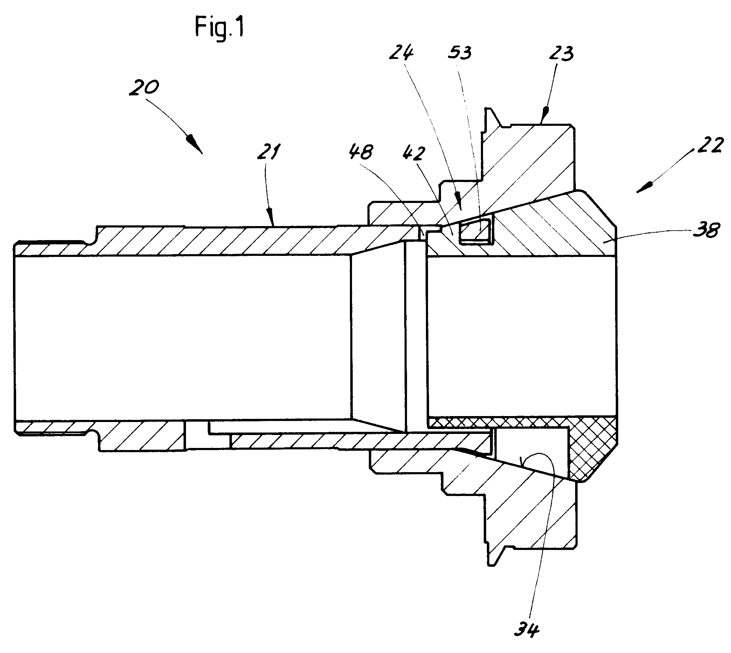

Der Grundkörper 21 ist ein rohrförmiges Teil. An seinem hinteren Ende ist er mit einem Befestigungsgewinde 25 in Form eines Außengewindes versehen, mittels dessen der Grundkörper 21 an der Zugvorrichtung der Drehmaschine befestigt werden kann. Um das Einschrauben des Grundkörpers 21 in die Zugvorrichtung zu erleichtern, weist er in seiner Wand wenigstens ein radial ausgerichtetes Durchgangsloch 26 auf, an dem ein Werkzeug angesetzt werden kann. Im vorderen Endbereich des Grundkörpers 21 ist der grundkörperseitige Kupplungsteil 24.1 angeordnet. Dazu gehört auf der Innenseite des Grundkörpers 21 eine von der freien Stirnseite mit der Stornfläche 27 ausgehende kreiszylindrische Erweiterung 28, an die eine kegelstumpfförmige Übergangsfläche 29 anschließt. Von dieser aus verläuft die kreiszylindrische Innenfläche 31 des Grundkörpers 21 bis zur hinteren Stirnseite. Auf der Außenseite schließt an die Stirnfläche 27 eine Außenkonusfläche 32 an, die sich bis auf die kreiszylindrische Außenfläche 33 des Grundkörpers 21 verjüngt. Die Außenfläche 33 ist am hinteren Endbereich zum Befestigungsgewinde 25 hin abgesetzt. Der Kegelwinkel der Außenkonusfläche 32 ist auf den Kegelwinkel der Innenkonusfläche 34 der Zangenaufnahme 23 abgestimmt (Fig. 1). Die Außenkonusfläche 32 ist am Grundkörper 21 in axialer Richtung so angeordnet, daß sie die Innenkonusfläche 34 der Zangenaufnahme 23 auch dann nicht berührt, wenn die gesamte Spannzange 20 bis zu ihrer hintersten Betriebsstellung in die Zangenaufnahme 23 hineingezogen ist.

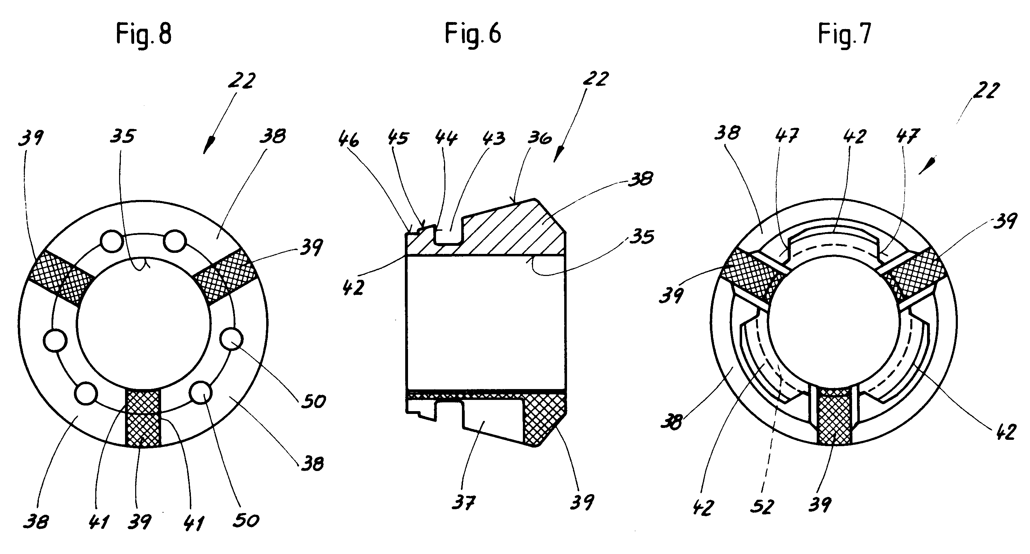

Aus Fig. 3 und aus Fig. 6 bis 8 ist zu ersehen, daß der Spannkopf 22 näherungsweise die Gestalt eines hohlen Kegelstumpfes hat. Er weist auf seiner Innenseite Spannflächen 35 für die einzuspannenden Werkstücke auf. Auf seiner Außenseite weist der Spannkopf 22 einen zu seiner vorderen Stirnseite hin sich erweiternden Außenkonus 36 auf, der auf den Innenkonus 34 der Zangenaufnahme 23 abgestimmt ist.

Der Spannkopf 22 wird durch sowohl in radialer wie auch in axialer Richtung durchgehende Längsschlitze 37 in einzelne Spannbacken 38 aufgeteilt. Die durch die Längsschlitze 37 entstandenen Zwischenräume zwischen den einzelnen Spannbacken 38 werden zu einem gewissen Teil durch eine gummielastische Masse 39 ausgefüllt. Die gummielastische Masse 39 wird in fließfähigem Zustand in die Zwischenräume zwischen den in eine Gießform eingesetzten Spannbacken 38 eingebracht und durch Wärmebehandlung in einen festen Zustand übergeführt, in welchem sie mit den einander zugekehrten Wandflächen 41 der Spannbacken 38 fest verbunden ist. Damit sind die Spannbacken 38 mittels der gummielastischen Masse 39 zum Spannkopf 22 miteinander vereinigt.

Wie aus Fig. 1, 3, 6 und 7 zu ersehen ist, weist der mit dem Spannkopf 22 verbundene Teil der Kupplungsvorrichtung 24, der Kupplungsteil 24.2, an jedem Spannbacken 38 je einen radial auswärtsragenden Vorsprung 42 auf. Diese Vorsprünge 42 sind dadurch entstanden, daß am Spannkopf 22 in dem betreffenden Längenabschnitt auf der Außenseite eine Umfangsnut 43 angebracht wurde, durch die bei den einzelnen Spannbacken vor den Vorsprüngen 42 eine in Umfangsrichtung kreisbogenförmig gekrümmte Ausnehmung vorhanden ist. Die dem hinteren Ende des Spannkopfes 22 näher gelegene Seitenwand der Umfangsnut 43 ist als ebene Kreisringfläche ausgebildet, die normal zur Längsachse des Spannkopfes 22 ausgerichtet ist. Die dadurch gebildete, vom Grundkörper 21 abgekehrte Stirnfläche 44 der Vorsprünge 42 bildet die spannkopfseitige Kupplungsfläche der Kupplungsvorrichtung 24. Aufgrund dieser Herstellungsart der Vorsprünge 42 liegt die Stirnfläche 44 bei allen Spannbacken 38 in der gleichen Normalebene zur Längsachse.

Wie aus Fig. 1, 3 und 6 ersichtlich ist, liegt am Spannkopf 22 die Umfangsnut innerhalb des Längenabschnittes, über den sich die Außenkonusfläche 36 erstreckt, so daß die Oberseite 45 der Vorsprünge 42 als Abschnitt einer Kegelstumpffläche einen in Umfangsrichtung gekrümmten Verlauf hat. Außerdem liegt diese Oberseite 45 ebenso wie die mit ihr fluchtende Außenkonusfläche 36 an der Innenkonusfläche 34 der Zangenaufnahme 23 an und trägt am hinteren Endbereich der Spannbacken 38 zu deren Spannkraft bei. Am hintersten Ende des Spannkopfes 22 ist im Anschluß an die Vorsprünge 42 eine kurze kreiszylindrische Zentrier-oder Spannfläche 46 vorhanden, über die der Spannkopf bei seiner Fertigung an seinem hinteren Ende eingespannt werden kann, ehe er in die einzelnen Spannbacken 38 zerteilt wird.

Wie aus Fig. 7 ersichtlich ist, haben die Vorsprünge 42 eine kleinere Umfangserstreckung als die Spannbacken 38. Die in der Längsrichtung des Spannkopfes 22 verlaufenden beiden Längswände 47 der Vorsprünge 42 sind parallel zueinander ausgerichtet und symmetrisch zur Symmetrielinie des zugehörigen Spannbackens 38 angeordnet.

Wie aus Fig. 1, 2, 4 und 5 ersichtlich ist, wird der am Grundkörper 21 angeordnete Teil der Kupplungsvorrichtung 24, der Kupplungsteil 24.1, durch Durchbrüche 48 gebildet, die im vorderen Längenabschnitt des Grundkörpers 21, und zwar im Bereich der Erweiterung 28, angebracht sind. Die Anzahl der Durchbrüche 48 ist gleich der Anzahl der Spannbacken 38 am Spannkopf 22. In Umfangsrichtung sind die Durchbrüche 48 in der gleichen Weise verteilt angeordnet wir die Spannbacken 38. Die Umfangserstreckung der Durchbrüche 48 ist etwas größer als die Umfangserstreckung der Vorsprünge 42. Die axiale Erstreckung der Durchbrüche 48 ist ebenfalls etwas größer als die axiale Erstreckung der Vorsprünge 42 unter Einschluß der daran anschließenden kreiszylindrischen Einspannfläche 46.

Die dem Spannkopf 22 nächstgelegene und daher von ihm abgekehrte Stirnwand 49 der Durchbrüche 48 ist bei allen Durchbrüchen zumindest annähernd in der gleichen Normalebene zur Längsachse des Grundkörpers 21 gelegen. Die Stirnwand 49 ist als Abschnitt einer ebenen Kreisringfläche ausgebildet. Sie bildet die grundkörperseitige Kupplungsfläche des Kupplungsteils 24.1.

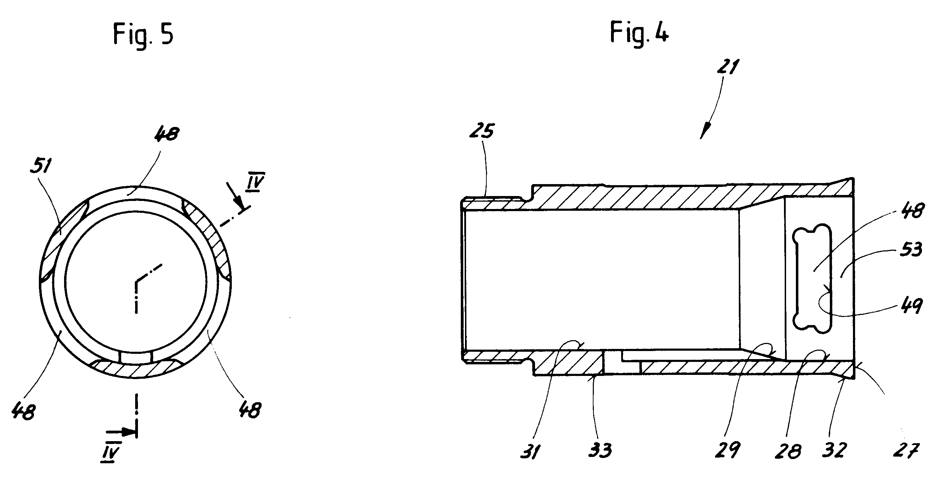

Wie aus Fig. 5 ersichtlich ist, ist die Umfangserstreckung der Durchbrüche 48 zumindest annähernd so gewählt, daß die in Umfangsrichtung zwischen ihnen stehenbleibenden Stege 51 zumindest annähernd die gleiche Querschnittsfläche haben, wie die Stege 52 (Fig. 7) zwischen den Vorsprüngen 42 und dem übrigen Teil der Spannbacken 38, damit unter Berücksichtigung der Festigkeitswerte des Werkstoffes des Grundkörpers 21 und des Spannkopfes 22 die Stege 51 und 52 innerhalb der zulässigen Werkstoffbeanspruchung zumindest annähernd gleich belastet werden können.

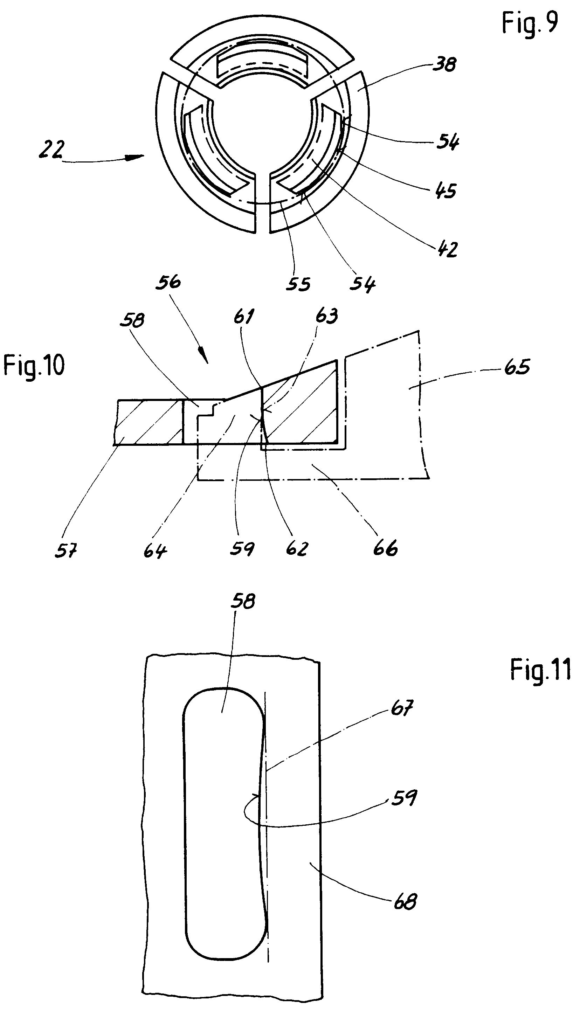

Wie aus Fig. 1 ersichtlich ist, liegen in der Kupplungsstellung der Spannzange 20 die Spannbacken 38 des Spannkopfes 22 an der Innenkonusfläche 34 der Zangenaufnahme 23 gleichmäßig an, wobei die Vorsprünge 42 der Spannbacken 38 mehr oder minder weit in die Durchbrüche 48 des Grundkörpers 21 eingreifen. Um diesen Kupplungszustand zu erreichen, müssen die Spannbacken 38 zumindest mit ihrem hinteren Ende radial so weit einwärts schräggestellt werden, daß die Vorsprünge 42 unter dem Jochteil 53 des Grundkörpers 21 zwischen den Durchbrüchen 48 und der freien Stirnseite hindurchbewegt werden können. Dafür ist es zweckmäßig, daß die Oberseite 45 der Vorsprünge 42 wenigstens in den von der Symmetrieebene der Spannbacken 38 am weitesten entfernt gelegenen beiden Seitenbereichen 54 (Fig. 9) gegenüber der Außenkonusfläche der Oberseite 45 zurückgesetzt ist, und zwar in der Weise und in dem Maße, daß die Seitenbereiche 54 und der verbleibende Teil der Oberseite 45 innerhalb einer in Fig. 9. strichpunktiert eingezeichneten Kreislinie 45 gelegen sind, wenn die Spannbacken 38 an ihrem hinteren Ende einwärts schräggestellt sind. Die Kreislinie 55 stellt die Aufrißprojektion der Erweiterung 28 des Grundkörpers 21 dar.

Aus Fig. 5 ist die Kupplungsvorrichtung 56 zu ersehen, die gegenüber der Kupplungsvorrichtung 24 geringfügig abgewandelt ist. Die Abwandlung besteht darin, daß am Grundkörper 57 bei den Durchbrüchen 58 die vordere Stirnwand 59 im Längsschnitt einen konvex gekrümmten Verlauf hat. Die Flächennormale der Stirnwand 59 ist im Bereich der Außenkante 61 zumindest annähernd parallel zur Längsachse des Grundkörpers 57 ausgerichtet und im Bereich der Innenkante 62 gegenüber der Längsachse um einen maximalen Neigungswinkel geneigt. Die Krümmung der Stirnwand 59 ist in Fig. 10 übertrieben stark dargestellt. Sie ist in Wirklichkeit so gewählt, daß die Flächennormale in der halben Höhe der Stirnwand 59 gegenüber der Längsachse des Spannkopfes 57 einen Neigungswinkel hat, der zumindest annähernd gleich dem Winkel der elastischen Verformung oder Schrägstellung der Stirnwand 63 des Vorsprunges 64 des Spannbackens 65 ist, wenn der Vorsprung 64 mit der maximalen Kupplungskraft belastet ist und sich dabei der Steg 66 zwischen dem Vorsprung 64 und dem Spannbacken 65 elastisch verbiegt. Dadurch wird die tatsächliche Berührungsfläche zwischen der Stirnwand 59 und der Stirnwand 63 bei voller Belastung der Kupplungsvorrichtung 56 in den Mittelbereich verlagert, während er bei geringerer Belastung mehr in Richtung auf die Außenkante 61 hin gelegen ist. Dadurch wird das Kantenreiten der beiden Stirnwände 59 und 63 im Bereich der Innenkante 62 vermieden.

Eine im gleichen Sinne wirkende zusätzliche Abwandlung der Kupplungsvorrichtung 56 ist aus Fig. 11 ersichtlich. Dabei ist die Grundrißprojektion der Stirnwand 59 des hier einfach langrund dargestellten Durchbruches 58 ebenfalls konvex gekrümmt, und zwar symmetrisch zur Umfangserstreckung des Durchbruches 58. Die Bogenhöhe dieser Krümmung ist größer als die Bogenhöhe der Grundrißprojektion einer im unbelasteten Zustand geraden vorderen Stirnwand ausgeführt, die durch die Strichpunktlinie 67 angedeutet ist, wenn der Jochteil 68 mit dieser geraden Stirnwand 67 bei maximaler Belastung der Kupplungsvorrichtung 56 sich elastisch verformt, und zwar nach vorne krümmt. Das Maß der Bogenhöhe kann von einer Krümmung der Stirnwand 67 abgeleitet werden, wenn eine gleichmäßige Belastung des Jochteils 68 angenommen wird. Zweckmäßiger ist es, entsprechend den wirklichen Verhältnissen, eine mehr oder minder punktförmige Belastung des Jochteils 68 in der Symmetrieebene anzunehmen.

Die aus Fig. 10 ersichtliche Krümmung der Stirnwand 59 des Durchbruches 58 kann ebenso gut auch bei der Stirnwand 63 des Vorsprunges 64 am Spannbacken 65 vorgesehen werden und dann die Stirnwand 59 zumindest im Längsschnitt nach Fig. 10 eben ausgeführt sein. Diese Krümmung läßt sich beim Ausdrehen der Nut für die Stirnfläche 63 leichter herstellen als beim Ausfräsen des Durchbruches 58 und beim anschließenden Schleifen seiner Stirnwand 59. Die in Fig. 11 dargestellte Krümmung der Stirnwand 59 in der Grundrißprojektion ist einfacher beim Grundkörper 57 herzustellen.

## Patentansprüche

1. Spannzange mit den Merkmalen:
- es sind ein Grundkörper (21) und ein Spannkopf (22) vorhanden,
- - die voneinander trennbar sind und
- - die mittels einer in axialer Richtung formschlüssigen und in radialer Richtung nachgiebigen Kupplungsvorrichtung (24) miteinander kuppelbar sind,
- der Spannkopf (22) weist auf seiner Innenseite Spannflächen (35) für die Werkstücke auf,
- der Spannkopf (22) weist auf seiner Außenseite einen zumindest zum Teil im Längenabschnitt der Spannflächen (35) gelegenen und zur freien Stirnseite hin sich erweiternden Außenkonus (36) auf,
- der Spannkopf (22) ist durch in radialer und axialer Richtung durchgehende Längsschlitze (37) in einzelne Spannbacken (38) aufgeteilt,
- am Grundkörper (21) ist an dem vom Spannkopf (22) abgekehrten Ende ein Befestigungsgewinde (25) für das Befestigen der Spannzange (20) an einer Zugvorrichtung vorhanden,
- am Spannkopf (22) ist als Teil der Kupplundsvorrichtung (24) an dem dem Grundkörper (21) zugekehrten Endabschnitt eines jeden Spannbacken (38) auf der Außenseite ein radial auswärtsragender Vorsprung (42) vorhanden,
- - der durch denjenigen Teil des Spannbackens (38) gebildet wird, der an eine in Umfangsrichtung gekrümmt verlaufende Ausnehmung (43) auf der Außenseite des Spannkopfes (22) anschließt, und
- - dessen vom Grundkörper (21) abgekehrte Stirnwand (44)
- - - zumindest annähernd parallel zu einer Normalebene zur Längsachse ausgerichtet ist und
- - - bei allen Spannbacken zumindest annähernd in der gleichen Normalebene zur Längsachse angeordnet ist,
- am Grundkörper (21) sind als Teil der Kupplungsvorrichtung (24) an dem dem Spannkopf (22) zugekehrten Endabschnitt Gegenmittel (48) zu den Vorsprüngen (42) an den Spannbacken (38) mit je einer der Stirnwand (44) der Vorsprünge (42) entgegengerichteten Stirnwand (49) vorhanden,
**gekennzeichnet** durch die Merkmale:
- zwischen den Spannbacken (38) sind elastische Mittel (39) vorhanden, die die Spannbacken (38) untereinander als Spannkopf (22) zusammenhalten,
- die Gegenmittel am Grundkörper (21) sind als Durchbrüche (48) ausgebildet,
- - deren Anzahl gleich der Anzahl der Spannbacken (38) am Spannkopf (22) ist,
- - die in Umfangsrichtung in der gleichen Weise verteilt angeordnet sind, wie die Spannbacken (38) am Spannkopf (22),
- - deren Umfangserstreckung zumindest ebenso groß ist, wie die Umfangserstreckung des Vorsprunges (42) an den Spannbacken (38),
- - deren axiale Erstreckung mindestens ebenso groß ist, wie die axiale Erstreckung des Vorsprunges (42) an den Spannbacken (38),
- die Längswände (47) der Vorsprünge (42) sind untereinander zumindest annähernd parallel und zumindest annähernd parallel zu der durch die Längsachse des Spannkopfes (22) hindurchgehenden Symmetrieebene des Spannbackens (38) ausgerichtet,
- der Außenabstand der Längswände (47) des Vorsprunges (42) ist kleiner als die Umfangserstreckung des Spannbackens (38).

2. Spannzange nach Anspruch 1,
**gekennzeichnet** durch die Merkmale:
- die Oberseile (45) des Vorsprunges (42) hat in Bezug auf die Symmetrieebene des Spannbackens (38) in der Umfangsrichtung des Spannkopfes (22) einen gekrümmten Verlauf,
- der Krümmungshalbmesser der Oberseite (45) des Vorsprunges (42) ist kleiner als der in der Symmetrieebene gemessene Abstand der Oberseite (45) von der Längsachse des Spannkopfes (22) und vorzugsweise zumindest annähernd gleich der halben lichten Weite des Grundkörpers (22) im Längenabschnitt (28) zwischen den Durchbrüchen (48) und dem benachbarten freien Ende (27).

3. Spannzange nach Anspruch 1 oder 2,
**gekennzeichnet** durch die Merkmale:
- von der Stirnwand (63) des Vorsprunges (64) an den Spannbacken (65) und von der vorderen Stirnwand (59) der Durchbrüche (58) am Grundkörper (57) hat zumindest eine Stirnwand (59) im Längsschnitt einen konvex gekrümmten Verlauf,
- die Flächennormale in der halben Höhe dieser Stirnwand (59) hat gegenüber der Längsachse des Grundkörpers (57) einen Neigungswinkel, der zumindest annähernd gleich ist dem Winkel der elastischen Verformung der Stirnwand (63) am Spannbacken (65) bei maximaler Belastung der Kupplungsvorrichtung (56).

4. Spannzange nach einem der Ansprüche 1 bis 3,
**gekennzeichnet** durch die Merkmale:
- von der Stirnwand (63) des Vorsprunges (64) an den Spannbacken (65) und von der vorderen Stirnwand (59) der Durchbrüche (58) am Grundkörper (57) hat zumindest eine Stirnwand (59) in der ebenen Abwicklung eine Grundrißprojektion mit konvex gekrümmtem Verlauf,
- die Bogenhöhe dieser Krümmung ist mindestens gleich, vorzugsweise größer als die Bogenhöhe der Grundrißprojektion einer geraden vorderen Stirnwand (67) der Durchbrüche (58), die diese bei einer Belastung in der Mitte der Stirnwand (67, 68) oder zumindeste bei einer über die ganze Stirnwand gleichmäßig verteilten Belastung der Stirnwand (67, 68) bei maximaler Belastung der Kupplungsvorrichtung (56) erfährt.

## Claims

1. A collet comprising the features;
- a base body (21) and a closer (22) are present
- - which are separable from one another and
- - which may be coupled together by means of a coupling device (24) which is positive-locking in the axial direction and flexible in the radial direction,
- the closer (22) has on its interior side gripping surfaces (35) for the workpieces,
- the closer (22) has on its exterior side an exterior cone (36) situated at least partially in the longitudinal portion of the gripping surfaces (35) and widening towards the free end surface,
- the closer (22) is divided into individual gripping jaws (38) by elongated slots (37) which pass through in the radial and the axial direction,
- an attachment thread (25) for attaching the collet (20) to a tension device is present on the base body (21) at the end facing away from the closer (22),
- a projection (42), projecting radially outwards, is present on the closer (22), as part of the coupling device (24), on the end portion, facing the base body (21), of each gripping jaw (38) on the exterior side,
- - the said projection being formed by the part of the gripping jaw (38) which adjoins a recess (43) extending in a curve in the peripheral direction on the exterior side of the closer (22), and
- - the end wall (44) thereof, facing away from the base body (21)
- - - being aligned at least approximately parallel to a normal plane with respect to the longitudinal axis, and
- - - in the case of all the gripping jaws, being arranged at least approximately in the same normal plane with respect to the longitudinal axis,
- counter means (48) to the projections (42) on the gripping jaws (38) are present on the base body (21), as part of the coupling device (24) on the end portion facing the closer (22), comprising a respective end wall (49) facing in the opposite direction to the end wall (44) of the projections (42),
characterised by the features;
- between the gripping jaws (38) there are elastic means (39) present which hold the gripping jaws (38) together reciprocally as the closer (22),
- the counter means on the base body (21) are designed as openings (48),
- - the number of which is equal to the number of gripping jaws (38) on the closer (22),
- - which are arranged distributed in the peripheral direction in the same manner as the gripping jaws (38) on the closer (22),
- - the peripheral extent of which is at least as great as the peripheral extent of the projection (42) on the gripping jaws (38),
- - the axial extent of which is at least as great as the axial extent of the projection (42) on the gripping jaws (38),
- the longitudinal walls (47) of the projections (42) are aligned at least approximately mutually parallel and at least approximately parallel to the plane of symmetry of the gripping jaw (38) passing through the longitudinal axis of the closer (22),
- the exterior distance apart of the longitudinal walls (47) of the projection (42) is smaller than the peripheral extent of the gripping jaw (38).

2. A collet according to claim 1,
characterised by the features;
- the upper side (45) of the projection (42) has a curved shape with respect to the plane of symmetry of the gripping jaw (38) in the peripheral direction of the closer (22),
- the radius of curvature of the upper side (45) of the projection (42) is smaller than the distance, measured in the plane of symmetry, of the upper side (45) away from the longitudinal axis of the closer (22) and preferably at least approximately equal to half the inside width of the base body (22) in the longitudinal portion (28) between the openings (48) and the adjacent free end (27).

3. A collet according to claim 1 or 2,
characterised by the features:
- of the end wall (63) of the projection (64) on the gripping jaws (65) and of the front end wall (59) of the openings (58) on the base body (57) at least one end wall (59) has in longitudinal section a convexly curved shape,
- the surface normal at half the height of this end wall (59) has with respect to the longitudinal axis of the base body (57) an angle of inclination which is at least approximately equal to the angle of elastic deformation of the end wall (63) on the gripping jaw (65) at maximum loading of the coupling device (56).

4. A collet according to one of claims 1 to 3,
characterised by the features:
- of the end wall (63) of the projection (64) on the gripping jaws (65) and of the front end wall (59) of the openings (58) on the base body (57) at least one end wall (59) has in the plane developed view a horizontal projection with a convexly curved shape,
- the rise of this curve is at least equal to, preferably greater than the rise of the horizontal projection of a straight front end wall (67) of the openings (58), the said end wall experiencing this upon loading in the centre of the end wall (67, 68), or at least upon loading of the end wall (67, 68) evenly distributed over the whole end wall, at maximum loading of the coupling device (56).

## Revendications

1. Pince de serrage du type suivant :
- elle comporte un corps principal (21) et une tête de serrage (22) qui peuvent être séparés ou reliés entre eux par un dispositif d'accouplement (24) assurant une liaison par la force en direction axiale, flexible en direction radiale.
- la tête de serrage (22) présente sur sa paroi interne des surfaces de serrage (35) des pièces à usiner.
- la tête de serrage (22) présente sur sa paroi externe une partie conique (36), au niveau d'au moins une partie de la section longitudinale des surfaces de serrage (35) et s'évasant en direction de la face frontale de la tête.
- la tête de serrage (22) est divisée en mâchoire de serrage (38) individuelles par des fentes longitudinales (37) continues en direction axiale et en direction radiale.
- le corps principal (21) porte à son extrémité opposée à la tête de serrage (22) un filetage (25) servant à fixer la pince de serrage (20) sur un dispositif de traction
- dans la tête de serrage (22), au niveau de l'extrémité de chaque mâchoire (38) en regard du corps principal (21) il est prévu, en tant qu'élément du dispositif d'accouplement (24), une partie (42) en saillie radiale vers l'extérieur.
-- qui est constituée par la partie de la mâchoire (38), bordant un évidement (43) périphérique courbe pratiquée dans la paroi externe de la tête de serrage.
-- dont la paroi (44) opposée au corps principal (21)
--- est au moins sensiblement parallèle à un plan perpendiculaire à l'axe longitudinal
--- et, pour l'ensemble des mâchoires, au moins approximativement est située dans un même plan perpendiculaire à l'axe longitudinal.
- dans le corps principal (21), au niveau de l'extrémité située du côté de la tête de serrage (22), il est prévu, en tant qu'éléments du dispositif d'accouplement (24), des contreparties (48) des saillies (42) portées par les mâchoires (38) et chaque fois les parois frontales (49) sont orientées pour faire face aux parois (44) des saillies (42).
caractérisée par les particularités suivantes :
- entre les mâchoires (38) sont prévus des moyens élastiques (39) maintenant les mâchoires de manière à former une tête de serrage (22).
- les contreparties portées par le corps principal sont constituées par des ouvertures (48).
-- de même nombre que les mâchoires (33) de la tête (32)
-- qui sont périphériquement réparties comme les mâchoires (38) sur la tête de serrage (22)
-- dont chacune présente une dimension périphérique au moins égale à celle de la saillie (42) de chaque mâchoire (38);
-- dont chacune présente une dimension axiale au moins égale à celle de la saillie (42) de chaque mâchoire (38).
- les parois longitudinales (47) des saillies (42) sont au moins approximativement parallèles entre elles, chacune d'elles étant au moins approximativement parallèle au plan de symétrie, passant par l'axe longitudinal de la tête, de la mâchoire (38)
- l'espacement externe des parois longitudinales (47) de la saillie (42) est inférieur à la dimension périphérique de la mâchoire de serrage (38).

2. Pince de serrage selon la revendication 1, caractérisée par les particularités suivantes :
- la face supérieure (45) de la saillie (42) présente, par rapport au plan de symétrie de la mâchoire de serrage (38) un profil en courbe selon la direction périphérique de la tête de serrage (22).
- le rayon de courbure de la face supérieure (45) de la saillie (42) est inférieur à la distance séparant, dans le plan de symétrie, la face (45) de l'axe longitudinal de la tête de serrage (22), ce rayon étant de préférence au moins sensiblement égal à la moitié de l'intervalle séparant l'intérieur du corps principal (21), en coupe longitudinale, les ouvertures (48) de l'extrémité libre (27).

3. Pince de serrage selon la revendication 2 ou 3, caractérisée par les particularités suivantes :
- de la paroi finale (63) de la saillie (64) portée par les mâchoires (65) ou de la paroi frontale avant (59) des ouvertures (58) du corps principal (57) l'une au moins des parois frontales (59), présente, en coupe longitudinale, un profil courbe.
- la perpendiculaire à la mi-hauteur de la surface de cette paroi frontale (59), présente, par rapport à l'axe longitudinal du corps principal (57) une inclinaison au moins sensiblement égale à l'angle de la déformation élastique que subit la paroi frontale (63) de la mâchoire de serrage (65) lorsque le dispositif d'accouplement (56) subit la charge maximale.

4. Pince de serrage selon une des revendications 1 à 3, caractérisée par les particularités suivantes :
- de la paroi frontale (63) de la saillie (64) portée par les mâchoires (65) et de la paroi frontale avant (59) des ouvertures (58) du corps principal (57), l'une au moins, (59) présente, en développement à plat d'une projection horizontale un tracé à courbure convexe.
- la flèche de cette partie courbe est au moins égale et de préférence supérieure à la flèche de la projection horizontale d'une paroi frontale avant (67) rectiligne appartenant à une ouverture (58), qui apparaît lorsqu'une charge est appliquée au milieu de la paroi (67, 68) ou au moins, dans le cas d'une répartition uniforme de la charge sur toute la paroi frontale, lorsque le dispositif d'accouplement (56) subit la charge maximale.
